# EUROPEAN PATENT APPLICATION

(11) **EP 1 950 940 A1**
(43) Date of publication of application: **30.07.2008**
(21) Application number: 06822326.2
(22) Date of filing: 26.10.2006
(51) Int. Cl.: H04M 1/60, H04B 7/26, H04M 1/00, H04M 1/62, H04Q 7/38

(54) **ELECTRONIC DEVICE, CRADLE APPARATUS AND ACOUSTIC APPARATUS**

(30) Priority: 28.10.2005 JP 2005314560
(71) Applicant: Kyocera Corporation, Kyoto-shi, Kyoto-fu 612-8501 (JP)
(72) Inventor: TSUBOI, Satoru, Yokohama-shi, Kanagawa 2248502 (JP)
(74) Representative: Feakins, Graham Allan
(86) International application number: PCT/JP2006/321350
(87) International publication number: WO 2007/049687

(57) **Abstract**

An electronic device able to provide audio the same as that in a case where the electronic device is not placed in an audio output region of a speaker even in a case where the electronic device is placed in that region is provided. A cradle device 3 is provided with a speaker 23 outputting audio based on an audio signal input from an audio signal terminal 22. A mobile phone 2 has a transmitter housing 6 which can be placed on the cradle device 3 and an audio processing portion 33 outputting the audio signal to the cradle device 3 via an audio signal terminal 36 which can be connected to the audio signal terminal 22. An audio signal change portion 41 changes the audio signal to be output to the speaker 23 when a receiver housing 5 of the mobile phone 2 is placed in an audio output region of the speaker 23.

## Description

### FIELD OF THE INVENTION

The present invention relates to a mobile phone or other electronic device (portable terminal device), a cradle device on which the electronic device is placed, and an audio system provided with the electronic device and cradle device.

### BACKGROUND ART

The technique of placing a mobile phone or other portable terminal device on a cradle device is known. As the cradle device, ones having for example a function of charging the mobile phones are widely spread. Patent Document 1 discloses a technique of mounting a speaker at a cradle device and playing back an audio signal from a mobile phone by the speaker during charging of the mobile phone.
Patent Document 1: Japanese Patent Publication (A) No. 2003-32351

### DISCLOSURE OF THE INVENTION

### PROBLEM TO BE SOLVED BY THE INVENTION

However, depending on the placement position of the speaker, the size of the portable terminal device, or the opened/closed state of the portable terminal device, and so on, when the portable terminal device is placed on the cradle device, the portable terminal device sometimes ends up covering the speaker of the cradle device. In this case, the audio which is output from the speaker is conveyed to the user changed in volume, sound pressure, or frequency characteristics, and so on.

An object of the present invention is to provide an electronic device, a cradle device, and an audio system able to provide a user with audio substantially the same as that in a case where an electronic device is not placed in the audio output region of the speaker even in a case where the electronic device is placed in that region.

### SUMMARY OF THE INVENTION

An electronic device of a first aspect of the present invention is provided with a housing which can be placed with a predetermined positional relationship with an external speaker outputting audio based on an audio signal and an audio outputting means placed in the housing and able to output the audio signal to the external speaker, wherein the audio outputting means has an audio signal changing means changing the audio signal to be output to the external speaker when the housing is placed in the predetermined positional relationship with the external speaker and positioned in an audio output region of the external speaker.

Preferably, the audio signal changing means changes the audio signal so that a volume or sound pressure of the audio output from the external speaker is increased or a frequency characteristic of the audio is changed.

Preferably, the audio signal changing means changes the audio signal so that the volume or the sound pressure of the audio in at least a high sound region of the audio output from the external speaker is increased.

Preferably, a housing position judging means judging whether or not the housing is positioned in the audio output region of the external speaker is provided in the housing, and the audio changing means changes the audio signal to be output to the external speaker in a case where it is judged by the housing position judging means that the housing is positioned in the audio output region of the external speaker.

Preferably, the housing is provided with a first housing and a second housing connected to the first housing in an openable/closable state, one of the first housing and the second housing is configured so that it can be placed in the predetermined positional relationship in any of an opened state and closed state, the housing is provided with an opened/closed detecting means detecting the opened/closed state of the first housing and the second housing, and the housing position judging means judges that the housing is not positioned in the audio output region of the external speaker where it is detected by the opened/closed detecting means that the first housing and the second housing are in the closed state.

Preferably, the conditions by which the housing position judging means judges that the housing is positioned in the audio output region of the external speaker include detection by a predetermined housing placement detecting means that the housing is placed in the predetermined positional relationship.

Preferably, an internal speaker which is provided in the housing and is able to output audio based on the audio signal output from the audio outputting means is provided, and the audio signal changing means changes the audio signal to be output to the internal speaker when the housing is positioned in the audio output region of the external speaker.

Preferably, the audio signal changing means changes the audio signal to be output to the internal speaker so that the volume or sound pressure of the audio output from the internal speaker is increased.

A cradle device of a second aspect of the present invention is provided with a placement part on which an electronic device is able to be placed, a speaker outputting audio based on an audio signal output from the electronic device, and an audio outputting means outputting the audio signal output from the electronic device to the speaker, wherein the audio outputting means has an audio signal changing means changing the audio signal to be output to the speaker in a case where the electronic device is placed on the placement part in a state where the electronic device is positioned in an audio output region of the speaker.

Preferably, the audio signal changing means changes the audio signal so that the volume or sound pressure of the audio output from the speaker is increased or a frequency characteristic of the audio is changed.

Preferably, the audio signal changing means changes the audio signal so that the volume or the sound pressure of the audio in at least a high sound region in the audio output from the speaker is increased.

Preferably, a placed state judging means judging whether or not the electronic device is placed on the placement part in a state where the electronic device is positioned in the audio output region of the speaker is provided, and the audio outputting means changes the audio signal to be output to the speaker in a case where it is judged by the placed state judging means that the electronic device is placed on the placement part in a state where the electronic device is positioned in the audio output region of the speaker.

Preferably, when the electronic device has a first housing, a second housing which is connected to the first housing in an openable/closable state, and an opened/closed detecting means detecting the opened/closed state, the placed state judging means can acquire detection results of the opened/closed detecting means and judges that the electronic device is not placed on the cradle device in a state where the electronic device is positioned in the audio output region of the speaker when the closed state of the electronic device is detected by the opened/closed detecting means.

An audio system of a third aspect of the present invention has a cradle device which is provided with an external speaker and outputs audio based on an audio signal input by an input portion from the external speaker, an electronic device having a housing which can be placed on the cradle device and an audio outputting means outputting the audio signal to the cradle device via an output portion which can be connected to the input portion, and an audio signal changing means changing the audio signal to be output to the external speaker in a case where the housing is placed on the cradle device in a state where the housing is positioned in the audio output region of the external speaker.

Preferably, the audio signal changing means changes the audio signal so that the volume or sound pressure of the audio output from the external speaker is increased or a frequency characteristic of the audio is changed.

Preferably, the audio signal changing means changes the audio signal so that the volume or the sound pressure of the audio in at least a high sound region in the audio output from the external speaker is increased.

Preferably, a placed state judging means judging whether or not the electronic device is placed on the cradle device in a state where the housing is positioned in the audio output region of the external speaker is provided, the housing is provided with a first housing and a second housing connected to the first housing in an openable/closable state and is configured so that the housing can be placed on the cradle device in either of the opened state and closed state, an opened/closed detecting means detecting the opened/closed state of the first housing and the second housing is provided, and the placed state judging means judges that the electronic device is not placed on the cradle device in the state where the housing is positioned in the audio output region of the external speaker when it is detected by the opened/closed detecting means that the first housing and the second housing are in the closed state.

Preferably, an internal speaker which is provided in the housing and can output audio based on the audio signal output from the audio outputting means is provided, and the audio signal changing means changes the audio signal to be output to the internal speaker in a case where the housing is positioned in the audio output region of the external speaker.

### EFFECT OF THE INVENTION

According to the present invention, even in a case where the electronic device is placed in the audio output region of the external speaker, audio substantially the same as that in the case where the electronic device is not placed in that region can be provided to the user.

### BRIEF DESCRIPTION OF THE DRAWINGS

[FIG. 1] Front views including partial see-through views showing a mobile phone and a cradle device according to a first embodiment of the present invention.
[FIG. 2] Front views including partial see-through views showing a state where the mobile phone of FIG. 1 is placed on the cradle device.
[FIG. 3] Side views including partial see-through views showing a state where the mobile phone of FIG. 1 is placed on the cradle device.
[FIG. 4] A block diagram showing configurations of signal processing systems of the mobile phone and cradle device of FIG. 1.
[FIG. 5] A flow chart showing a routine of processing executed by a control portion of FIG. 4 for controlling an audio signal changing means.
[FIG. 6] A block diagram showing configurations of signal processing systems of the mobile phone and cradle device according to a second embodiment of the present invention.
[FIG. 7] Side views including partial see-through views showing the mobile phone and cradle device according to a third embodiment of the present invention.
[FIG. 8] A perspective view of the cradle device of FIG. 7.

### DESCRIPTION OF NOTATIONS

2... portable terminal device, 3... cradle device, 5... receiver housing, 6... transmitter housing, 22... audio signal terminal (input portion), 23... speaker (external speaker), 33... audio processing portion (audio outputting means), and 41... audio signal change portion.

### DETAILED DESCRIPTION OF THE INVENTION

### (First Embodiment)

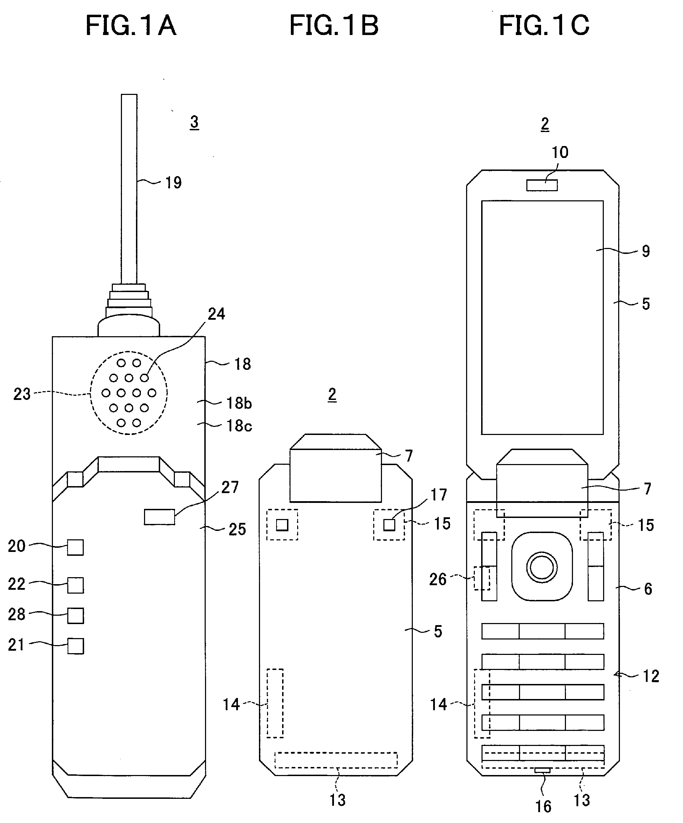

FIG. 1A to FIG. 1C are plan views including partial see-through views showing a mobile phone 2 and a cradle device 3 according to a first embodiment of the present invention, in which FIG. 1A shows the cradle device 3, FIG. 1B shows the mobile phone 2 in a closed state, and FIG. 1C shows the mobile phone in an open state.

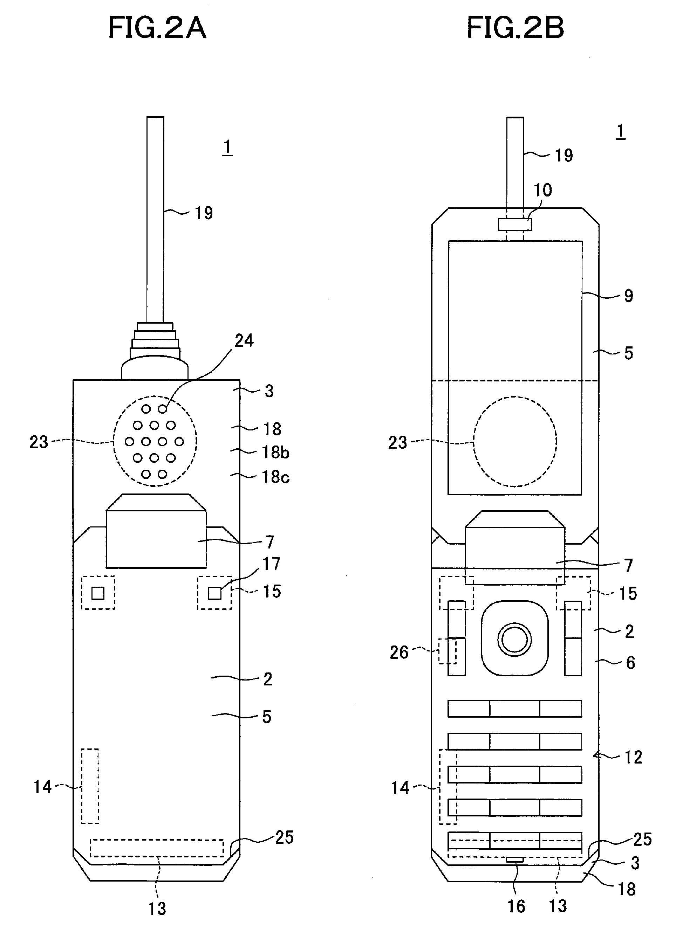

FIG. 2A and FIG. 2B are plan views including partial see-through views showing a state where the mobile phone 2 is placed on the cradle device 3, in which FIG. 2A shows a case where the mobile phone 2 is closed, and FIG. 2B shows a case where the mobile phone 2 is opened.

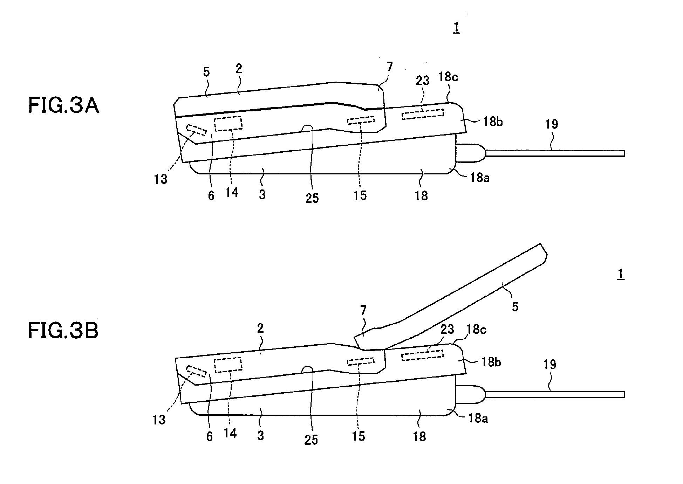

FIG. 3A and FIG. 3B are side views including partial see-through views showing a state where the mobile phone 2 is placed on the cradle device 3, in which FIG. 3A shows a case where the mobile phone 2 is closed, and FIG. 3B shows a case where the mobile phone 2 is opened.

Note that an audio system 1 is configured by a combination of the mobile phone 2 and the cradle device 3.

The mobile phone 2 is configured as so-called a flip-open type mobile phone and is provided with a receiver housing (second housing) 5 and a transmitter housing (first housing) 6. The receiver housing 5 and transmitter housing 6 are connected at their end portions by a connection portion 7, so the mobile phone 2 can be opened/closed pivoting about the connection portion 7. The receiver housing 5 and transmitter housing 6 are formed as generally thin parallelepiped bodies. In the closed state, they are superimposed on each other and their contours substantially coincide with each other when one housing side is seen from the other housing side.

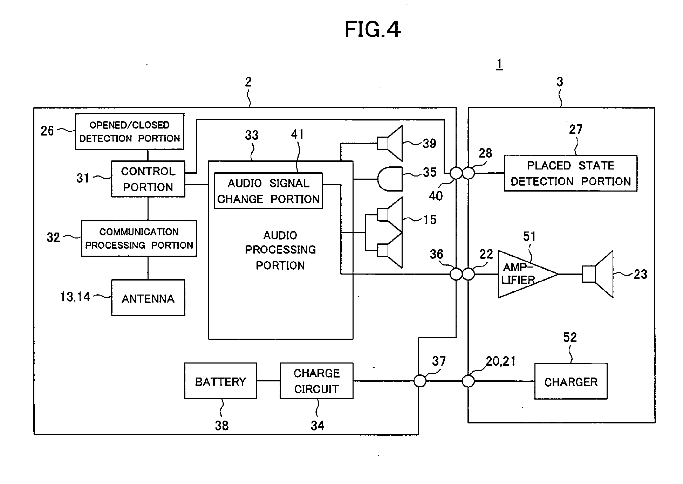

The receiver housing 5 is formed into a generally thin parallelepiped shape by for example a resin. The receiver housing 5 is provided with a display portion 9 for displaying images on a facing surface facing the transmitter housing 6 in the closed state. The display portion 9 is configured by for example a liquid crystal display. Note that the receiver housing 5 is provided with, other than this, a speaker 39 for speech (see FIG. 4). A sound output port 10 of the speaker is provided in the facing surface.

The transmitter housing 6 is formed into a generally thin parallelepiped shape by for example a resin. The transmitter housing 6 is provided with an operation portion 12 accepting operations of the user, a main antenna 13 and a sub antenna 14 for transmitting/receiving radio waves, speakers 15 for outputting audio notices etc., a microphone 35 for speech (see FIG. 4), a sound guide hole 16 of the microphone 35, and an opened/closed detection portion 26 for detecting an opened/closed state of the mobile phone 2.

The main antenna 13 is built in an end portion on the opposite side to the connection portion 7 of the transmitter housing 6. The sub antenna 14 is built in the transmitter housing 6 on the side surface side of the transmitter housing 6 at a position between the center of the transmitter housing 6 and the main antenna 13. The main antenna 13 and sub antenna 14 are configured as diversity antennas. For example, the main antenna 13 is used for transmission/reception etc. of speech and mail and constantly utilized. The sub antenna 14 is utilized together with the main antenna 13 when data communication other than audio speech is carried out, for example, when music is downloaded.

The speakers 15 are built in the end portion of the transmitter housing 6 on the connection portion 7 side. Two are provided at the sideward sides of the transmitter housing 6. In the end portion on the connection portion 7 side of the transmitter housing 6, sound output holes 17 opened in a surface opposite to the surface facing the receiver housing 5 (surface facing the cradle device) and outputting audio output by the speakers 15 are provided. Note that the sound output holes 17 may be provided so as to be opened at side surfaces of the transmitter housing 6 as well. The speakers 15 are for example used for the output of audio notices for informing the user of incoming calls, erroneous operation, etc., the output of audio of the other party in a conversation when speaking by utilizing a hands-free function, and audio output in playing back music and video.

The opened/closed detection portion 26 includes a suitable switch or sensor. For example, use may be made of a depression switch which is depressed and outputs an ON signal when an angle formed by the receiver housing 5 and transmitter housing 6 becomes a predetermined degree or less. A reflection surface and an optical sensor for emitting light having a specific frequency toward the reflection surface, receiving reflected light having the specific frequency, and outputting an ON signal when a light reception amount exceeds a threshold value may be placed so that a distance relative to each other changes along with opening/closing as well. An optical sensor outputting not a digital signal such as ON signal or OFF signal, but a signal having a voltage in accordance with the light reception amount may be used as well. Note that, in general, the mobile phone configured to be openable/closable is provided with an opened/closed detection portion for switching an operation state of the display portion etc. in accordance with the opened/closed state. That opened/closed detection portion may be used for the opened/closed detection portion 26.

The cradle device 3 has a housing 18, a cord 19 for supplying power to the cradle device 3, charging terminals 20 and 21 and an audio signal terminal (input portion) 22 for electrically connecting the cradle device 3 and mobile phone 2, a speaker 23 for outputting audio based on the audio signal input from the mobile phone 2, a placed (placement) state detection portion 27 for detecting the placed state of the mobile phone 2, and a detection terminal 28 for outputting a signal from the placed state detection portion 27 to the mobile phone 2.

The housing 18 is provided with for example a lower cover 18a placed on a desk or the like and an upper cover 18b covered over the lower cover 18a. The lower cover 18a and upper cover 18b are formed by for example a resin. The upper cover 18b is covered over the lower cover 18a so that it is inclined relative to the plane on which the housing 18 is placed. The housing 18 is formed, as a whole, in a trapezoidal shape having an inclined surface 18c inclined relative to the plane (desk surface etc.) on which the housing 18 is placed.

At the upper surface of the housing 18, a recess (placement part) 25 for placing the mobile phone 2 therein is formed. The recess 25 is provided in the downward side of the inclined surface 18c. The recess 25 is formed to a shape with which the transmitter housing 6 of the mobile phone 2 can fit and is formed so that a bottom portion against which the back surface of the transmitter housing 6 abuts is inclined relative to the plane (desk surface etc.) on which the cradle device 3 is placed. The mobile phone 2 is placed on the cradle device 3 by fitting and inserting the transmitter housing 6 in the recess 25 so that the connection portion 7 side is oriented toward the top side of the inclined surface 18c.

Note that the placement position of the transmitter housing 6 relative to the housing 18 of the cradle device 3 is defined by the recess 25, the placement position of the speaker 23 is fixed with respect to the housing 18 of the cradle device 3. Namely, the positional relationship of the transmitter housing 6 with respect to the speaker 23 when the transmitter housing 6 is placed in the recess 25 is constant. That positional relationship is an example of the predetermined positional relationship of the present invention.

As shown in FIG. 3A and FIG. 3B, the depth of the recess 25 is substantially equivalent to or less than the thickness of the transmitter housing 6. Accordingly, even when the mobile phone 2 is opened and closed in a state where the mobile phone 2 is placed in the recess 25, a circumferential edge of the recess 25 of the inclined surface 18c does not abut against the receiver housing 5, so opening/closing of the mobile phone 2 is not prevented.

The cord 19 is extended from the housing 18. A not shown power plug is provided at its front end. By insertion of the power plug into a power receptacle for supplying power having a commercial use frequency, power is supplied to the cradle device 3 via the cord 19.

Charging terminals 20 and 21 are provided so as to protrude from the bottom portion of the recess 25 and abut against the charging terminals 37 (see FIG. 4) provided in the transmitter housing 6 of the mobile phone 2 and connected when the mobile phone 2 is inserted and fitted in the recess 25.

The audio signal terminal 22 is provided so as to protrude from the bottom portion of the recess 25. Further, it is provided adjacent to the charging terminals 20 and 21. When the mobile phone 2 is inserted and fitted in the recess 25, the audio signal terminal 22 abuts on the audio signal terminal (output portion) 36 (see FIG. 4) provided in the transmitter housing 6 of the mobile phone 2 to be connected with it.

The speaker 23 is provided at the inclined surface 18c upward from the recess 25. The speaker 23 is placed so that the sound output surface faces the back surface of the inclined surface 18c (faces upward). Sound output holes 24 for outputting audio output from the speaker 23 are provided in the inclined surface 18c. The speaker 23 is configured by for example a low sound use speaker, that is, a so-called woofer.

Note that, the mobile phone 2 is placed in the recess 25 so that the connection portion 7 faces the speaker 23, and the main antenna 13 and sub antenna 14 are provided on the end portion side opposite to the connection portion 7. Therefore, the main antenna 13 and sub antenna 14 are placed at positions away from the speaker 23 in the housing of the mobile phone 2.

Further, the speaker 23 is provided on the upper side of the inclined surface 18c, while the main antenna 13 and sub antenna 14 are provided on a lower side of the inclined surface 18c. Therefore, the main antenna 13 and sub antenna 14 are placed at slightly lower positions (different positions) in the vertical direction than the speaker 23.

Note that only one of the main antenna 13 and sub antenna 14 may be placed at a position away from the speaker 23 or a position different from the placement position of the speaker 23 in the vertical direction.

The placed state detection portion 27 is provided in the recess 25 and includes a suitable switch or sensor. For example, this may include a depression switch which is depressed by the weight of the mobile phone 2 and outputs an ON signal when the mobile phone 2 is placed in the recess 25. An optical sensor emitting light having a specific frequency, receiving the light having the specific frequency reflected by the mobile phone 2, and outputting an ON signal when the light reception amount exceeds a threshold value may be used as well.

The detection terminal 28 is provided so as to protrude from the bottom portion of the recess 25. For example, it is provided adjacent to the charging terminals 20 and 21. When the mobile phone 2 is inserted and fitted in the recess 25, the detection terminal 28 abuts on the detection terminal 40 (see FIG. 4) provided in the transmitter housing 6 of the mobile phone 2 for connection.

FIG. 4 is a block diagram showing the configurations of signal processing systems of the mobile phone 2 and cradle device 3.

The mobile phone 2 is provided with a control portion 31 for controlling operations of the various electronic components, a communication processing portion (communicating means) 32 for performing wireless communication, an audio processing portion (audio outputting means) 33 for performing processing on the audio output, and a charge circuit 34. Note that the mobile phone 2 is provided with, other than these, an image processing portion for converting video data from the control portion 31 to a video signals and outputting it to the display portion 9, and other various means, but illustration is omitted.

The control portion 31 is configured by for example an IC including a CPU, ROM, or RAM. The CPU executes a program stored in the ROM to control the operations of the communication processing portion 32, audio processing portion 33, etc. based on signals from the operation portion 12 etc. A detection signal of the opened/closed detection portion 26 and a detection signal of the placed state detection portion 27 are output to the control portion 31.

The communication processing portion 32 includes a high frequency circuit and performs wireless communication utilizing radio waves. Specifically, the communication processing portion 32 modulates audio data, image data, and other various data processed at the control portion 31 etc. and transmits the same via the main antenna 13. Further, the communication processing portion 32 demodulates signals received via the main antenna 13 and sub antenna 14 and outputs the same to the control portion 31 etc.

The audio processing portion 33 mixes, amplifies, and otherwise processes the audio signal from the microphone 35, the audio signal based on music data stored in an external storage device, and so on and outputs the result to the speaker 39 for speech, the speakers 15 utilized for notices etc., and the audio signal terminal 36.

The audio signal change portion 41 changes the audio signal to be output to the speakers 15 and via audio signal terminals 36 and 22 to the speaker 23. For example, the audio signal is changed so that the volume or sound pressure is increased or a frequency characteristic of the audio is changed. In the change of a frequency characteristic, for example the audio signal is changed so that the volume or sound pressure in at least a high sound region is increased in the audio. Further, the change of volume, sound pressure, and frequency characteristic is carried out for audio of for example 1 kHz to 10 kHz. Note that, the manufacturer may set or the user may set how the audio signal is changed.

The audio signal change portion 41 may change the audio signal in a digital manner or may change the audio signal in analog manner. For example, the audio signal change portion 41 may include an equalizer processing portion for switching an equalizer setting of a sound source IC configured by a DSP or the like and may change the frequency characteristics etc. in a digital manner by switching the equalizer setting. It may include an analog variable filter and change a frequency characteristic etc. in analog manner by controlling the characteristics of the analog variable filter. It may include a filter and a changeover switch for turning on/off the filter and change frequency characteristics etc. in an analog manner by turning on/off the filter.

The charge circuit 34 converts the power supplied to the charging terminal 37 to a power having a suitable voltage and supplies this to a battery 38 serving as the power source of the mobile phone 2. Further, it starts charging (supplying power) to the battery 38 or interrupts the charging in accordance with the charged state of the battery 38 etc.

The cradle device 3 is provided with an amplifier 51 and a charger (AC converter) 52. The amplifier 51 amplifies the audio signal input from the mobile phone 2 via the audio signal terminal 22 and outputs the same to the speaker 23. The charger 52 converts an AV current having a commercial frequency and supplied via the cord 19 to a DC current having a suitable voltage and outputs the same to the charging terminals 20 and 21. Note that the cradle device 3 need not have a charge function.

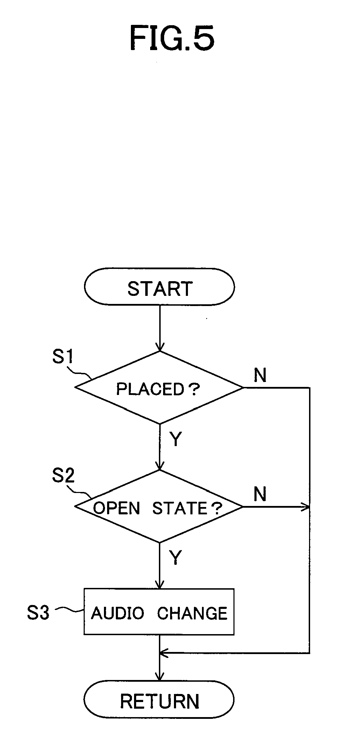

FIG. 5 is a flow chart showing a routine of processing executed by the control portion 31 to control the operation of the audio signal change portion 41. This processing is repeatedly executed at a predetermined cycle (for example 1 second) after turning on the power supply of the mobile phone 2.

At step S1, the control portion 31 judges whether or not the mobile phone 2 is placed on the cradle device 3 based on detection results output from the placed state detection portion 27 and input via the detection terminal 28 and detection terminal 40. When judging that the mobile phone 2 is placed, the routine proceeds to step S2.

At step S2, the control portion 31 judges whether or not the mobile phone 2 is in the opened state based on the detection result from the opened/closed detection portion 26. Here, it is judged as the opened state by the opened/closed detection portion 26 when for example the angle formed by the receiver housing 5 and transmitter housing 6 becomes 30 degrees or more, and conversely judged as the closed state when the same angle becomes 15 degrees or less. Then, when judging it as in the opened state, the routine proceeds to step S3.

When the mobile phone 2 is placed on the cradle device 3 and in the opened state, as shown in FIG. 2B and FIG. 3B etc., the speaker 23 is covered by the receiver housing 5, so the volume, sound pressure, frequency characteristics, etc. of the audio from the speaker 23 change.

Therefore, at step S3, the control portion 31 controls the operation of the audio signal change portion 41 so as to change the volume, sound pressure, frequency characteristics, etc. of at least one of the audio signal to be output to the speakers 15 and the audio signal to be output via the audio signal terminals 36 and 22 to the speaker 23.

Note that the control portion 31 functions as the housing position judging means or placed state judging means when it executes step S1 or step S2.

According to the above embodiment, when it is judged that the mobile phone 2 is placed on the cradle device 3 and in the opened state, in a case where the housing of the mobile phone 2 is positioned in the audio output region of the speaker 23 of the cradle device 3 as in the case where the speaker 23 of the cradle device 3 is covered by the receiver housing 5 of the mobile phone 2, the audio signal to be output to the speaker 23 of the cradle device 3 is changed by the audio signal change portion 41 compared to the case where the speaker 23 is not covered. Therefore, the change of audio due to the covering of the speaker 23 by the receiver housing 5 can be prevented.

For example, by increasing the volume or sound pressure of the audio output from the speaker 23, a drop of the volume or sound pressure of the audio conveyed to the user can be prevented. An audio having a higher frequency has a higher directivity, therefore the drop of the volume or sound pressure when the housing is positioned in the audio output region of the speaker 23 is large. However, by changing the frequency characteristics, concretely, changing the frequency characteristics so that the volume or sound pressure of the audio in the high sound region which is output from the speaker 23 is increased, the change of the sound quality can be prevented.

Further, the audio signal change portion 41 changes the audio signal of the audio output from the speakers 15 of the mobile phone 2 as well, therefore the change of the audio of the speaker 23 can be supplemented by the speakers 15.

For example, by changing the audio signal to be output to the speakers 15 so that the volume or sound pressure of the audio output from the speakers 15 is increased, the drop of volume or sound pressure of the audio conveyed to the user can be prevented. By changing the frequency characteristics, concretely, changing the frequency characteristics so that the volume or sound pressure of the audio in the high sound region which is output from the speaker 23 is increased, the change of the sound quality can be prevented.

### (Second Embodiment)

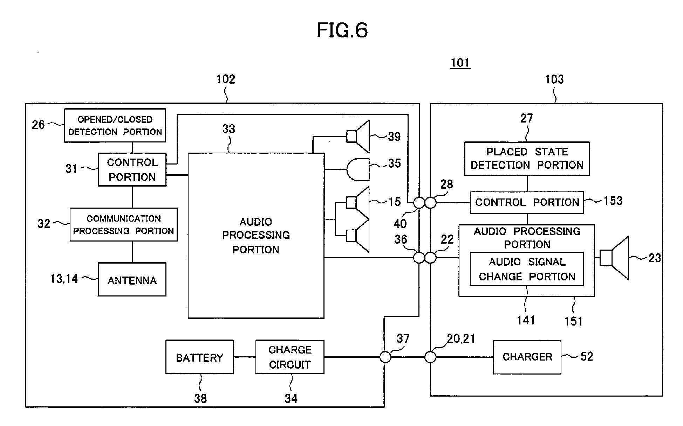

FIG. 6 is a block diagram showing the configuration of the signal processing system of an audio system 101 provided with a mobile phone 102 and a cradle device 103 according to a second embodiment of the present invention. Note that the structure of the second embodiment is similar to FIG. 1 to FIG. 3. The same notations as those in the first embodiment are attached to the configurations similar to those of the first embodiment.

In the second embodiment, an audio processing portion 151 is provided in the cradle device 103. The audio processing portion 151 includes for example an amplifier for amplifying the audio signal input via the audio signal terminal 22 etc., and outputs the audio signal input via the audio signal terminal 22 to the speaker 23.

The audio processing portion 151 is provided with an audio signal change portion 141. The audio signal change portion 141 changes the audio signal in the same way as the audio signal change portion 41 of the first embodiment and changes the audio signal input via the audio signal terminal 22.

The operation of the audio processing portion 151 is controlled by the control portion 153 provided in the cradle device 103. The control portion 153 is configured by an IC etc. in the same way as the control portion 31 and controls the operation of the audio signal change portion 141 based on the detection signal from the placed state detection portion 27 and a detection signal from the opened/closed detection portion 26 input via the detection terminals 40 and 28. The processing routine thereof is the same as that in FIG. 5 of the first embodiment.

According to the second embodiment, an effect the same as that by the first embodiment is obtained. Namely, when the speaker 23 of the cradle device 3 is covered by the receiver housing 5 of the mobile phone 2, the audio signal to be output to the speaker 23 of the cradle device 3 is changed by the audio signal change portion 141 compared to the case where the speaker 23 is not covered, therefore a change of the audio due to the covering of the speaker 23 by the receiver housing 5 can be prevented.

For example, by increasing the volume or sound pressure of the audio output from the speaker 23, the drop of volume or sound pressure of the audio conveyed to the user can be prevented. By changing the frequency characteristics, concretely, changing the frequency characteristics so that the volume or sound pressure of the audio in the high sound region which is output from the speaker 23 is increased, the change of the sound quality can be prevented.

Further, most of the configuration for preventing the change of audio of the speaker 23 of the cradle device 103 is provided in the cradle device 103, therefore a design change with respect to already existing mobile phones can be reduced.

### (Third Embodiment)

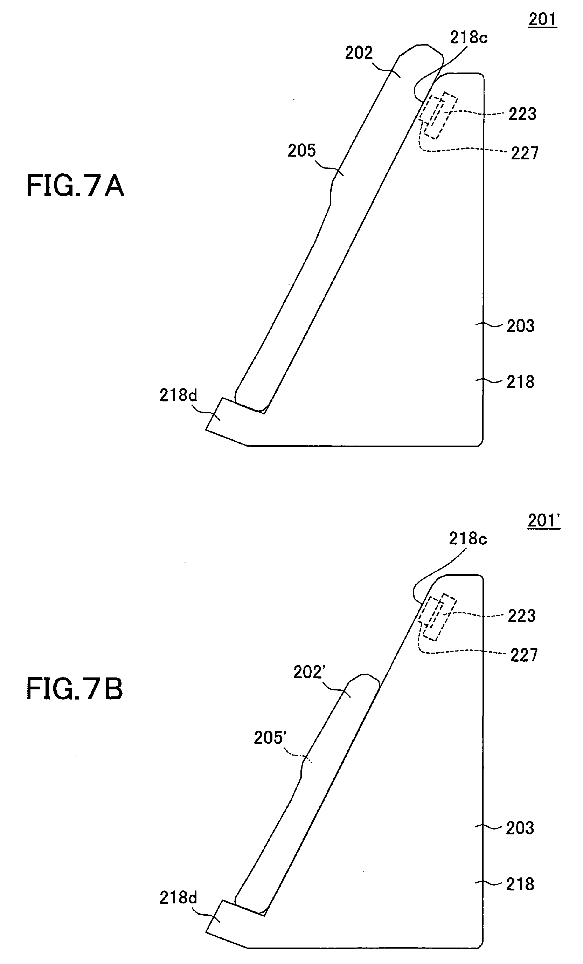

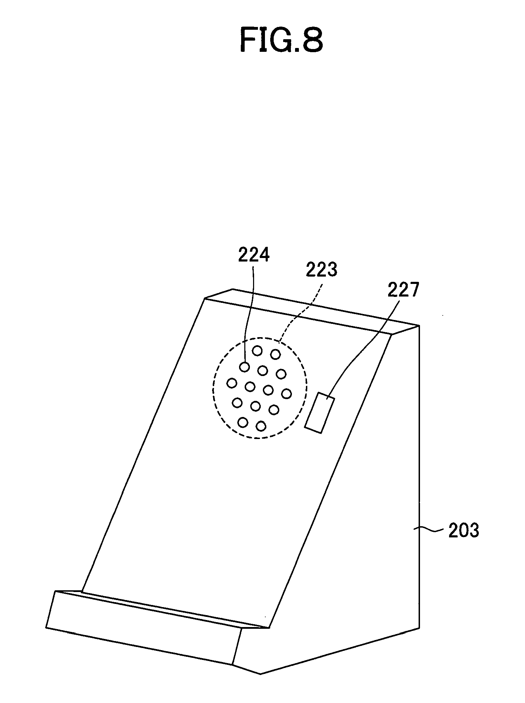

FIG. 7A and FIG. 7B are side views including partial see-through views showing an audio system 201 (201') provided with a mobile phone 202 (202') and a cradle device 203 according to a third embodiment of the present invention. FIG. 7A shows a state where the mobile phone 202 is placed on the cradle device 203, and FIG. 7B shows a state where a mobile phone 202' different from the mobile phone 202 of FIG. 7A is placed on the cradle device 203 the same as that in FIG. 7A. Further, FIG. 8 is a perspective view of an outer appearance of the cradle device 203.

The mobile phone 202 (202') is configured as a so-called straight type mobile phone and is provided with one housing 205 (205'). Note, it is also possible to place a mobile phone which can be opened and closed as in the first and second embodiments on the cradle device 203.

A housing 205 of the mobile phone 202 has a size that covers a speaker 223 explained later when it is placed on the cradle device 203. On the other hand, a housing 205' of the mobile phone 202' is smaller than the housing 205 of the mobile phone 202 and does not cover the speaker 223 even when it is placed on the cradle device 203.

The cradle device 203 is configured so as to support the mobile phone 202 (202') by an inclined surface 218c of a housing 218 and a projection 218d provided below the inclined surface 218c. The speaker (external speaker) 223 is provided in the upper side of the inclined surface 218c. Not shown sound output holes of the speaker 223 are formed there.

At an adjacent position of the placement position of the speaker 223 at the inclined surface 218c, for example sideward of the placement portion of the speaker 223, a placed state detection portion 227 for detecting whether or not a mobile phone is placed on the cradle device 3 is provided. The placed state detection portion 227 has for example the same configuration as that of the placed state detection portion 27 of the first embodiment. It is configured by a depression switch outputting an ON signal when depressed or an optical sensor outputting an ON signal when a reflecting object is placed close to that.

In the third embodiment as well, in the same way as the first and second embodiments, an audio signal change portion is provided in the mobile phone 202 (202') or cradle device 203. Further, the control portion provided in the mobile phone 202 (202') or cradle device 203 executes steps S1 and S3 of FIG. 5. When the ON signal is output by the placed state detection portion 227, it is judged that the housing of the mobile phone 202 is positioned in the audio output region of the speaker 223, and the audio signal to be output to the speaker 223 is changed.

Accordingly, when the mobile phone 202 is placed on the cradle device 3, the speaker 223 ends up being covered by the housing of the mobile phone 202, but the ON signal is output by the placed state detection portion 227, and the audio output from the speaker 223 is changed with respect to the case where the ON signal is not output. On the other hand, when the mobile phone 202' is placed on the cradle device 203, an OFF signal is output by the placed state detection portion 227, and the audio output from the speaker 223 is not changed.

According to the third embodiment, the same effect as that by the first embodiment is obtained. Namely, when the speaker 223 of the cradle device 203 is covered by the housing 205 of the mobile phone 202, the audio signal to be output to the speaker 223 of the cradle device 203 is changed with respect to the case where the speaker 223 is not covered (case where the mobile phone 202' is placed). Therefore, the change of audio due to the covering of the speaker 223 by the mobile phone 202 can be prevented.

Further, in the third embodiment, irrespective of the size of the mobile phone and whether or not the opening/closing is possible, it is judged whether or not the speaker 223 is covered by the mobile phone. Therefore, the universality of the cradle device 203 is high, so even a case where the user changes the model of the mobile phone can be coped with.

The present invention is not limited to the above embodiments and may be executed in various ways.

The audio signal changing means, opened/closed detecting means, placement state detecting means, placed state detecting means, housing position judging means, and placed state judging means may be provided in either of the mobile phone or cradle device, may be provided in both, or may be configured by a combination of means provided in both.

The audio output region of the external speaker can be suitably defined according to various conditions for example the directivity of the external speaker, positional relationship between the user and cradle device or volume or sound pressure of the external speaker assumed in the case where an electronic device is used placed on the cradle device, or change of audio which can be recognized by the user. For example, a case where the electronic device is placed to be superimposed a part or all of the sound output surface of the external speaker in a direction that the electronic device faces the sound output surface may also be defined as the case where the electronic device is placed in the audio output region of the external speaker.

The change of audio signal is sufficient so far as at least one audio signal between the audio signal output to the external speaker and the audio signal output to the internal speaker can be changed. Further, a change of the audio signal so that the volume or sound pressure is increased includes such a change so that the state changes from the state where the audio is not output to the state where the audio is output. For example, the audio may not be output from the internal speaker when the portable terminal device is not positioned in the audio output region, but the audio may be output from the internal speaker when the portable terminal device is positioned in the audio output region.

The change of the audio signal may be a two-step change of before and after the change, may be a change in a plurality of steps, or a change in an analog manner as well. For example, in the first embodiment, the change of the audio output from the external speaker differs according to a degree of opening/closing of the mobile phone, therefore the audio signal may be suitably changed in a plurality of steps or in an analog manner in accordance with the degree of opening/closing detected by the opened/closed detection portion.

The electronic device which can be opened/closed may be one in which at least an area of superimposition of the two housings on each other changes and is not limited to the flip-open type. For example, it may be a slide type in which two housings move parallel to each other or revolver type in which two housings slide while rotating about a stacking direction of these as the rotation axis direction.

The change of the audio signal by the audio signal changing means may be made in a case of judging whether or not a predetermined change condition (for example, the electronic device is positioned in the audio output region of the external speaker) is satisfied based on outputs of various switches and sensor etc. and judging that the change condition is satisfied or may be one mechanically changing the audio signal without any judgment processing such as changing the audio signal due to the depression switch turning the filter on/off due to the weight of the electronic device when the electronic device is placed on the cradle device.

Where the judgment is carried out, the change condition may be appropriately set. For example it may be determined as the condition that ON signals are output by two or more detecting means as in the first and second embodiments, and it may be determined as the condition that the ON signal is output by one detecting means as in the third embodiment. Further, other conditions may also be added, for example, making the change when the audio signal is a specific type (change in for example a case where the output sound is only the audio for playback of a video and no audio notice is included).

Further, the device and system are configured so that the opened/closed state of the housing is detected and the audio signal is changed in the opened state, but they may also be configured to detect a state where the housing is positioned in a region that exerts an influence upon the audio output from the speaker of the cradle device (audio output region) and change the audio signal in that state.

Note that the above embodiment also corresponds to an embodiment of the electronic device of a fourth aspect of the present invention shown below.

### (1)

An electronic device characterized in that the device has
a housing which can be placed in a predetermined positional relationship with an external speaker converting an audio signal for output,
an audio outputting means placed in the housing and able to output the audio signal to the external speaker when the housing is positioned in the predetermined positional relationship with the external speaker, and
an internal speaker placed in the housing and able to output audio based on the audio signal output from the audio outputting means,
the audio outputting means has an audio signal changing means changing the audio signal to be output to the internal speaker when the housing is positioned in the predetermined positional relationship and the housing is positioned in an audio output region of the external speaker.

### (2)

An electronic device as set forth in the above (1), characterized in that
the audio signal changing means changes the audio signal so that a volume or sound pressure of the audio output from the internal speaker is increased or a frequency characteristic of the audio is changed.

### (3)

An electronic device as set forth in the above (2), characterized in that
the audio signal changing means changes the audio signal so that the volume or the sound pressure of the audio in at least a high sound region in the audio output from the internal speaker is increased.

### (4)

An electronic device as set forth in the above (1), characterized in that
the electronic device is a portable terminal device,
the external speaker is provided in a cradle device on which the portable terminal device is placed,
the predetermined positional relationship is a positional relationship when the portable terminal device is placed on the cradle device, and
the housing has a charging terminal which is connected to an external terminal provided in the cradle device and receives a supply of power when it is placed on the cradle device.

Further, the above embodiment corresponds to an embodiment of a control method of an audio system of a fifth aspect of the present invention shown below as well.

### (5)

A control method of an audio system outputting an audio signal from an electronic device placed on a cradle device to a speaker provided in the cradle device and making the speaker output audio based on the audio signal, characterized in that
it is detected whether or not the electronic device is placed on the cradle device and
in a case where change conditions including a detection of being carried as at least one condition are satisfied, the audio signal to be output to the speaker is changed.

### (6)

A control method of an audio system as set forth in the above (5), characterized in that
when changing the audio signal to be output to the speaker, the audio signal is changed so that the volume or sound pressure of the audio output from the speaker is increased or a frequency characteristic of the audio is changed.

### (7)

A control method of an audio system as set forth in the above (6), characterized in that
when changing the audio signal to be output to the speaker, the audio signal is changed so that the volume or the sound pressure of the audio in at least a high sound region in the audio output from the speaker is increased.

### (8)

A control method of the audio system as set forth in the above (5), characterized in that
in a case where the electronic device has a first housing and a second housing connected to the first housing in an openable/closable state and is configured so that it can be placed on the cradle device in any of the open state and closed state, an opened/closed state of the electronic device is detected, and
the change conditions include detection that the electronic device is in the open state.

## Claims

1. An electronic device comprising:
a housing which can be placed with a predetermined positional relationship with an external speaker outputting audio based on an audio signal, and
an audio outputting means placed in the housing and able to output the audio signal to the external speaker; wherein
the audio outputting means has an audio signal changing means changing the audio signal to be output to the external speaker when the housing is placed in the predetermined positional relationship with the external speaker and positioned in an audio output region of the external speaker.

2. An electronic device according to claim 1, where in:
the audio signal changing means changes the audio signal so that a volume or sound pressure of the audio output from the external speaker is increased or a frequency characteristic of the audio is changed.

3. An electronic device according to claim 2, where in:
the audio signal changing means changes the audio signal so that the volume or the sound pressure of the audio in at least a high sound region of the audio output from the external speaker is increased.

4. An electronic device according to claim 1, further comprising:
a housing position judging means being in the housing and judging whether or not the housing is positioned in the audio output region of the external speaker; wherein
the audio changing means changes the audio signal to be output to the external speaker in a case where it is judged by the housing position judging means that the housing is positioned in the audio output region of the external speaker.

5. An electronic device according to claim 4, where in:
the housing is provided with a first housing and a second housing connected to the first housing in an openable/closable state, one of the first housing and the second housing is configured so that it can be placed in the predetermined positional relationship in any of an opened state and closed state;
the housing is provided with an opened/closed detecting means detecting the opened/closed state of the first housing and the second housing; and
the housing position judging means judges that the housing is not positioned in the audio output region of the external speaker where it is detected by the opened/closed detecting means that the first housing and the second housing are in the closed state.

6. An electronic device according to claim 4, where in:
the conditions by which the housing position judging means judges that the housing is positioned in the audio output region of the external speaker include detection by a predetermined housing placement detecting means that the housing is placed in the predetermined positional relationship.

7. An electronic device according to claim 1, further comprising:
an internal speaker which is provided in the housing and is able to output audio based on the audio signal output from the audio outputting means; wherein
the audio signal changing means changes the audio signal to be output to the internal speaker when the housing is positioned in the audio output region of the external speaker.

8. An electronic device according to claim 7, where in:
the audio signal changing means changes the audio signal to be output to the internal speaker so that the volume or sound pressure of the audio output from the internal speaker is increased.

9. A cradle device comprising:
a placement part on which an electronic device is able to be placed,
a speaker outputting audio based on an audio signal output from the electronic device, and
an audio outputting means outputting the audio signal output from the electronic device to the speaker; wherein
the audio outputting means has an audio signal changing means changing the audio signal to be output to the speaker in a case where the electronic device is placed on the placement part in a state where the electronic device is positioned in an audio output region of the speaker.

10. A cradle device according to claim 9, wherein:
the audio signal changing means changes the audio signal so that the volume or sound pressure of the audio output from the speaker is increased or a frequency characteristic of the audio is changed.

11. A cradle device according to claim 10, wherein:
the audio signal changing means changes the audio signal so that the volume or the sound pressure of the audio in at least a high sound region in the audio output from the speaker is increased.

12. A cradle device according to claim 9, further comprising:
a placed state judging means judging whether or not the electronic device is placed on the placement part in a state where the electronic device is positioned in the audio output region of the speaker, wherein
the audio outputting means changes the audio signal to be output to the speaker in a case where it is judged by the placed state judging means that the electronic device is placed on the placement part in a state where the electronic device is positioned in the audio output region of the speaker.

13. A cradle device according to claim 12, wherein:
when the electronic device has a first housing, a second housing which is connected to the first housing in an openable/closable state, and an opened/closed detecting means detecting the opened/closed state, the placed state judging means can acquire detection results of the opened/closed detecting means and judges that the electronic device is not placed on the cradle device in a state where the electronic device is positioned in the audio output region of the speaker when the closed state of the electronic device is detected by the opened/closed detecting means.

14. An audio system comprising:
a cradle device which is provided with an external speaker and outputs audio based on an audio signal input by an input portion from the external speaker,
an electronic device having a housing which can be placed on the cradle device and an audio outputting means outputting the audio signal to the cradle device via an output portion which can be connected to the input portion, and
an audio signal changing means changing the audio signal to be output to the external speaker in a case where the housing is placed on the cradle device in a state where the housing is positioned in the audio output region of the external speaker.

15. An audio system according to claim 14, wherein:
the audio signal changing means changes the audio signal so that the volume or sound pressure of the audio output from the external speaker is increased or a frequency characteristic of the audio is changed.

16. An audio system according to claim 15, wherein:
the audio signal changing means changes the audio signal so that the volume or the sound pressure of the audio in at least a high sound region in the audio output from the external speaker is increased.

17. An audio system according to claim 14, further comprising:
a placed state judging means judging whether or not the electronic device is placed on the cradle device in a state where the housing is positioned in the audio output region of the external speaker; wherein
the housing is provided with a first housing and a second housing connected to the first housing in an openable/closable state and is configured so that the housing can be placed on the cradle device in either of the opened state and closed state,
an opened/closed detecting means detecting the opened/closed state of the first housing and the second housing is provided, and
the placed state judging means judges that the electronic device is not placed on the cradle device in the state where the housing is positioned in the audio output region of the external speaker when it is detected by the opened/closed detecting means that the first housing and the second housing are in the closed state.

18. An audio system according to claim 14, further comprising:
an internal speaker which is provided in the housing and can output audio based on the audio signal output from the audio outputting means, wherein
the audio signal changing means changes the audio signal to be output to the internal speaker in a case where the housing is positioned in the audio output region of the external speaker.
